# EUROPÄISCHE PATENTSCHRIFT

(11) **EP 1 438 529 B1**
(45) Veröffentlichungstag und Bekanntmachung des Hinweises auf die Patenterteilung: **07.09.2005**
(21) Anmeldenummer: 02801877.8
(22) Anmeldetag: 01.10.2002
(51) Int. Cl.: F16L 37/00

(54) **GASSTECKDOSE**
GAS PLUG CONNECTOR
CONNECTEUR DE GAZ

(30) Priorität: 22.10.2001 DE 10151995
(43) Veröffentlichungstag der Anmeldung: 21.07.2004
(73) Patentinhaber: Mertik Maxitrol GmbH & Co. KG, 06502 Thale (DE)
(72) Erfinder: ALBRECHT, Günter, 06502 Weddersleben (DE); VOGT, Thomas, 06507 Bad Suderode (DE)
(74) Vertreter: Albrecht, Günter
(86) Internationale Anmeldenummer: PCT/EP2002/010997
(87) Internationale Veröffentlichungsnummer: WO 2003/036154

(56) Entgegenhaltungen:
- CH-A- 378 829
- DE-C- 253 698
- US-A- 4 683 905

## Beschreibung

### Technisches Gebiet

Die Erfindung betrifft eine Gassteckdose mit einem Gehäuse, das einen Eingangsstutzen für die Herstellung einer festen Verbindung der Gassteckdose mit einer ortsfest an oder in einer Wand installierten Gasleitung, und eine Absperreinrichtung für den Anschluss eines Gasanschlusssteckers, insbesondere eines Gasschlauchsteckers, aufweist. Die Absperreinrichtung gibt beim Anschluss des Gasanschlusssteckers erst nach hergestellter äußerer Dichtheit den inneren Gasweg frei.

### Stand der Technik

Gassteckdosen dienen zur Herstellung einer Verbindung zwischen einer ortsfest installierten Gasleitung in Gebäuden und einem gasbetriebenen Gerät, wie beispielsweise ein Haushaltherd oder ein Wäschetrockner. Mit ihrer Hilfe ist eine einfache Verbindung der Gasverbraucher mit der Gasleitung möglich.

Gassteckdosen der eingangs genannten Art sind bekannt. So ist in der DE 11 36 294 ein sogenannter Gasanschlusshahn beschrieben, bei dem die Verbindung durch Einführen eines passenden Gasschlauchsteckers in die Anschlussbohrung eines aus einem Hahngehäuse mit darin eingesetztem, drehbarem Hahnküken bestehenden Hahnteiles hergestellt wird. Dabei wird gleichzeitig durch Drehen des Gasschlauchsteckers das Öffnen bzw. Schließen des Gasanschlusshahnes bewirkt. Das Hahngehäuse ist seinerseits mittels Anschlussgewinde mit der ortsfest installierten Gasleitung verbunden.

Eine weitere, ebenfalls in der Praxis bewährte Ausführung einer Gassteckdose ist in der DE 35 19 933 A1 beschrieben. Hier besitzt die Gassteckdose einen im Gehäuse verdrehbaren rohrförmigen Gasdurchiasskörper für die Aufnahme eines Gasanschlusssteckers und einen rechtwinklig zum Gasdurchlasskörper gerichteten Eintrittskanal. Das Absperrorgan besteht aus einer um die Längsachse des Gasdurchlasskörpers verdrehbaren Kugel mit einem rechtwinkligen Kugelkanal. Das Eintrittsende des Gasdurchlasskörpers ragt in das Austrittsende des Kugelkanals hinein und ist mit der Kugel drehfest gekuppelt. Die Kugel liegt mit ihren in Längsrichtung des Eintrittskanals diametral gegenüber liegenden Seiten an zwei elastischen Dichtungsringen des Gehäuses an, von denen ein Dichtungsring an einem in den Eintrittskanal eingesetzten Rohrstutzen angeordnet ist, mit dem der Dichtungsring gegen die Kugel andrückbar ist.

Bei der in der DE 91 12 208 U1 beschriebenen Lösung handelt es sich um eine Gassteckdose, die unter Beibehaltung der insbesondere in der DE 35 19 933 A1 beschriebenen Ausführungsform speziell für die Unterputzinstallation verwendbar ist, indem das Gehäuse an seinem Eingangsstutzen mit einem Außengewinde für eine Überwurfmutterverschraubung versehen und herausnehmbar in einem für die Unterputzinstallation bestimmten Kasten angeordnet ist. Dabei befindet sich die Öffnung für den Gasanschlussstecker in einer Öffnung des vorderseitigen abnehmbaren Deckels des Kastens. Ferner enthält der Kasten in einer Seitenwand eine Tülle. Das aus dem Kasten herausragende Ende der Tülle ist mit der Gasleitung verbindbar und das in den Kasten hineinragende Ende besitzt die an den Eingangsstutzen anschließbare Überwurfmutterverschraubung.

Eine weitere Gassteckdose ist in der nachveröffentlichten DE 100 61 653 C1 beschrieben. Diese Gassteckdose besteht aus einem Grundkörper mit integriertem Eingangsstutzen zur Herstellung einer festen Verbindung mit der ortsfest installierten Gasleitung, einem in den Grundkörper eingeschraubten Ausgangsstutzen und einer Grundplatte, die die äußere Mantelfläche des Ausgangsstutzens in einem definierten zur Aufnahme des Gasanschlusssteckers dienenden Abstand umschließt und ansonsten mit dem Grundkörper verschraubt ist. Desweiteren dient die Grundplatte als Anschlag an einer Wand, an der sie ebenfalls befestigt ist. Auf der Grundplatte ist eine Haube befestigt, die bei abgetrenntem Gasanschlussstecker mittels einer Abdeckung die Anschlussöffnung des Ausgangsstutzens verschließt, wobei die Abdeckung eine Verriegelung besitzt. Diese Verriegelung ist durch eine erste Einführbewegung des Gasanschlusssteckers, auf den die Verriegelung der Abdeckung abgestimmt ist, in eine Einführöffnung entriegelbar. Durch zumindest eine weitere Bewegung des Gasanschlusssteckers gibt die Abdeckung die Anschlussöffnung des Ausgangsstutzens zum Anschluss des Gasanschlusssteckers frei.

Weitere Gassteckdosen bzw. Verbindungskupplungen sind aus den Dokumenten CH 378 829 A, US 4 683 905 A und DE 253 698C bekannt.

Bei allen diesen genannten und beschriebenen Lösungen ist es von Nachteil, dass die Lage der Anschlussbohrung für den Gasschlauchstecker von der Ausrichtung der verlegten Gasleitung bezogen auf die äußere Oberfläche der Wand abhängt. Um die Gassteckdose in einer optisch ansprechenden Art und Weise installieren zu können, darf zwischen der äußeren Oberfläche der Wand und der ortsfest installierten Gasleitung keine Lageabweichung auftreten. Damit ist bei der Installation der Gasleitung ein hoher Aufwand notwendig.

Desweiteren ist es insbesondere bei den Aufputzausführungen von Nachteil, dass mit der erfolgten Installation auch der sichtbare Bereich der Gassteckdose mit installiert ist. Das birgt die Gefahr in sich, dass es bei den noch notwendigen Arbeiten bis zur endgültigen Fertigstellung eines Raumes zu Beschädigungen, wie zum Beispiel Kratzern, kommen kann, die das dekorative Aussehen der Gassteckdose negativ beeinflussen.

Ein weiterer Nachteil bei den meisten Gassteckdosen ist die fehlende Möglichkeit bei späteren Renovierungs- oder Sanierungsarbeiten eine erneute Anpassung oder auch ein Auswechseln des sichtbaren Teiles der Gassteckdose vorzunehmen.

### Darstellung der Erfindung

Der Erfindung liegt das Problem zugrunde, eine Gassteckdose der genannten Art zu entwickeln, die eine Lageanpassung der Gassteckdose bezogen auf die äußere Oberfläche der Wand und damit einen Ausgleich von Lageabweichungen zur ortsfest installierten Gasleitung gewährleistet. Weiterhin soll die endgültige Installierung des äußeren sichtbaren Bereiches der Gassteckdose erst nach der endgültigen Fertigstellung beispielsweise eines Raumes möglich sein. Desweiteren soll auch ein Auswechseln des äußeren sichtbaren Bereiches der Gassteckdose ohne größeren Aufwand ermöglicht werden.

Erfindungsgemäß wird das Problem dadurch gelöst, dass die Gassteckdose ein Gehäuse, eine Absperreinrichtung und ein Befestigungselement aufweist. Dabei besitzt das Gehäuse einen Eingangsstutzen für die Herstellung einer festen Verbindung der Gassteckdose mit einer ortsfest an oder in einer Wand installierten Gasleitung. Die Absperreinrichtung dient zum Anschluss eines Gasanschlusssteckers, insbesondere eines Gasschlauchsteckers, wobei sie erst nach hergestellter äußerer Dichtheit den inneren Gasweg freigibt. Mit einer rohrförmigen Tülle, die an ihrem dem Gehäuse zugewandten Ende einen Bund aufweist, der auf der dem Gehäuse abgewandten Seite durch eine Rastnut begrenzt wird, ragt die Absperreinrichtung gasdicht in das Gehäuse, das im Inneren mit einer Nut versehen ist, in der ein federnder Haltering, der abgewinkelte Enden aufweist, die durch eine im Bereich der Nut im Gehäuse befindliche Aussparung nach Außen ragen, angeordnet ist. Der Haltering befindet sich mit seinem ringförmigen Bereich im aufgespreizten Zustand vollständig in der Nut und ermöglicht so das Hineingleiten der Tülle in das Gehäuse, wohingegen bei der Lage des Halteringes in der Rastnut ein Herausgleiten der Tülle aus dem Gehäuse verhindert ist. Das Befestigungselement ist einerseits mit der Wand und andererseits mit der Absperreinrichtung verbunden, wobei die Absperreinrichtung gegenüber dem Gehäuse nach dem einseitigen Lösen des Befestigungselementes um die Längsachse der Tülle schwenkbar ist. Erst mit zusätzlicher Betätigung der abgewinkelten Enden des Halteringes wird dessen kreisförmiger Bereich in die Nut des Gehäuses aufgespreizt und ein Entfernen der Absperreinrichtung ermöglicht.

Damit wurde eine Lösung gefunden, mit der die weiter oben genannten Nachteile des Standes der Technik beseitigt wurden. Die Absperreinrichtung, zu der auch der sichtbare Teil der Gassteckdose gehört, braucht erst nach der Fertigstellung des Raumes und kann dann in optisch ansprechender Form installiert werden, da die Lageabweichung der ortsfest installierten Gasleitung ausgeglichen werden kann. Somit kann die Leitungsinstallation in der fachüblichen Art und Weise ohne zusätzlichen Aufwand erfolgen. Auch ein Wechsel des sichtbaren Teiles der Gassteckdose ist somit ermöglicht.

Weitere vorteilhafte Ausgestaltungen der Erfindung gehen aus den anderen Patentansprüchen hervor. So erweist es sich als besonders günstig, wenn die der Absperreinrichtung zugewandte Flanke der im Gehäuse befindlichen Nut so ausgeführt ist, dass sich die Nutbreite vom Nutgrund ausgehend vergrößert, da dadurch die Sicherheit gegen ein nicht beabsichtigtes Herausziehen der Absperreinrichtung noch weiter erhöht wird.

Bei einer weiteren vorteilhaften Ausgestaltung ist die dem Bund abgewandte Flanke der Rastnut so ausgeführt, dass sich die Nutbreite vom Nutgrund ausgehend vergrößert. Mit dieser Ausführung wird es ermöglicht, dass der Haltering bei einer Längsbewegung der Tülle in Richtung des Gehäuses wieder aus der Rastnut herausgleiten kann und somit die Lage der Gassteckdose auch in Längsrichtung der Längsachse der Tülle einstellbar ist. Das ist insbesondere bei einer in vielen Fällen des Aussehens wegen gewünschten Unterputzinstallation bzw. bei der Verwendung von sogenannten Vorsatzwänden von Vorteil, da die ansonsten zusätzlichen notwendigen Anpassungsarbeiten bezüglich der Tiefe der Gasleitung bezogen auf die äußere Oberfläche der Wand mit einem noch höheren Arbeitsaufwand verbunden, bzw. die bisherigen Gassteckdosen dazu nicht geeignet sind. Besonders die auftretenden Probleme, wenn zum Zeitpunkt der Installation der Gasleitung die genauen Maße noch nicht bekannt sind, wie es beispielsweise bei der Verwendung von Fliesen der Fall ist, sind damit gelöst.

Eine weitere Ausgestaltung ergibt sich, wenn die Oberfläche der Tülle in ihrer vom Gehäuse sich entfernenden Längsrichtung nach der Rastnut einen sich konisch verjüngenden Bereich aufweist. Das hat den Vorteil, dass bei dieser Ausführung zusätzlich auch die Längsachse der Tülle schwenkbar ist, wodurch eine noch bessere Anpassung ermöglicht wird.

### Ausführungsbeispiel

Die erfindungsgemäße Gassteckdose wird nachstehend an einem Ausführungsbeispiel als eine für eine Unterputzinstallation geeignete Ausführungsform näher beschrieben. Es zeigen:
- Fig. 1: eine Gassteckdose in geschnittener Darstellung in Geschlossenstellung,
- Fig. 2: eine Ansicht der Gassteckdose aus Fig. 1 im Schnitt X - X,
- Fig. 3: eine Ansicht A der Gassteckdose aus Fig. 1 im teilweise geschnittenen Zustand,
- Fig. 4: eine Gassteckdose in geschnittener Darstellung in Offenstellung mit Gasanschlussstecker,
- Fig. 5: eine Teilansicht der Gassteckdose aus Fig. 4,

Die erfindungsgemäße Gassteckdose weist ein Gehäuse 1, eine Absperreinrichtung 2 und ein Befestigungselement 3 auf.

Das Gehäuse 1 besitzt einen in diesem Ausführungsbeispiel rechtwinklig zur Längsachse des Gehäuses 1 angeordneten, integrierten Eingangsstutzen 4, der in diesem Fall mit einem Innengewinde zur Herstellung einer festen Verbindung der Gassteckdose mit einer nicht dargestellten ortsfest installierten Gasleitung versehen ist. Es versteht sich, dass sich der Eingangsstutzen 4 auch beispielsweise an einer Stirnseite des Gehäuses befinden kann, und dass die Verbindung beispielsweise auch als Pressverbindung o.ä. ausgebildet sein kann. Der durch den Eingangsstutzen 4 gebildete Gaseingang führt in einen zylindrischen Raum 5, in dem im Anschluss an den Gaseingang ein Gasströmungswächter 6 eingepresst ist.

In unmittelbarer Nähe einer stirnseitigen Öffnung 7 des Gehäuses 1 weist der zylindrische Raum 5 eine Nut 8 auf, die im Bereich einer Aussparung 9 unterbrochen ist. Die der Öffnung 7 zugewandte Flanke der Nut 8 ist dabei so ausgeführt, dass sich die Nutbreite vom Nutgrund ausgehend vergrößert. In der Nut 8 befindet sich ein federnder kreisförmiger Haltering 10, dessen Innendurchmesser so festgelegt ist, dass er teilweise in den Raum 5 hineinragt. Die Enden 11 des Halteringes 10 sind radial nach Außen gebogen und ragen durch die Aussparung 9 hindurch. Außerhalb des Gehäuses 1 sind die Enden 11 nochmals vorzugsweise derart rechtwinklig abgebogen, dass sie parallel zur Längsachse des Gehäuses 1 von diesem weggerichtet sind.

In den Raum 5 des Gehäuses 1 ragt durch die Öffnung 7 eine zur Absperreinrichtung 2 zugehörige Tülle 12, die an ihrem im Gehäuse 1 befindlichen Ende einen Bund 13 mit einer umlaufenden Nut aufweist, in der sich ein O-Ring 14 befindet, über den die notwendige äußere Gasdichtheit gewährleistet ist. Auf seiner dem Gehäuse 1 abgewandten Seite wird der Bund 13 durch eine Rastnut 15 begrenzt, deren dem Bund 13 abgewandte Flanke so ausgeführt ist, dass sich die Nutbreite vom Nutgrund ausgehend vergrößert. Im Anschluss an die Rastnut 15 weist die Oberfläche der Tülle 12 einen sich konisch verjüngenden Bereich 16 auf, der durch einen als Anschlag 17 dienenden Bund von einem sich anschließenden, den Gasausgang aufweisenden Ausgangsstutzen 18 getrennt ist, der zur Aufnahme eines Gasanschlusssteckers 19 bestimmt ist. Zwei auf dem äußeren Umfang des Ausgangsstutzens 18 befindliche O-Ringe 20 dienen zur Herstellung der äußeren Gasdichtheit.

Die Tülle 12 bildet mit ihrer Innenkontur einen Ventilsitz 21 für ein Absperrventil 22, dessen Schließkörper 23 längsbeweglich zur Achse der Tülle 12 und damit auch zum Ventilsitz 21 auf einem Führungsstück 24 gelagert ist. Dabei wird der Schließkörper 23 unter der Kraft einer Schließfeder 25, die sich mit einem Ende auf dem Führungsstück 24 und mit dem anderen Ende am Schließkörper 23 abstützt, in Schließrichtung belastet. Zur Gewährleistung der Gasdichtheit dienen auf dem Schließkörper befindliche O-Ringe 26, die in Schließstellung am Ventilsitz 21 anliegen. Mit einer axialen Verlängerung 27 ragt der Schließkörper 23 in den Ausgangsstutzen 18 hinein.

Eine noch zur Absperreinrichtung 2 gehörende Grundplatte 28 weist einen rohrförmigen Dom 29 auf, der die äußere Mantelfläche des Ausgangsstutzens 18 in einem durch den Gasanschlussstecker 19 geforderten Abstand umfasst. An der Stirnseite des Domes 29 stützt sich der als Bund ausgeführte Anschlag 17 der Tülle 12 ab, der über ein Halteblech 30, das mit dem Dom 29 verschraubt ist, gegen diesen gepresst wird.

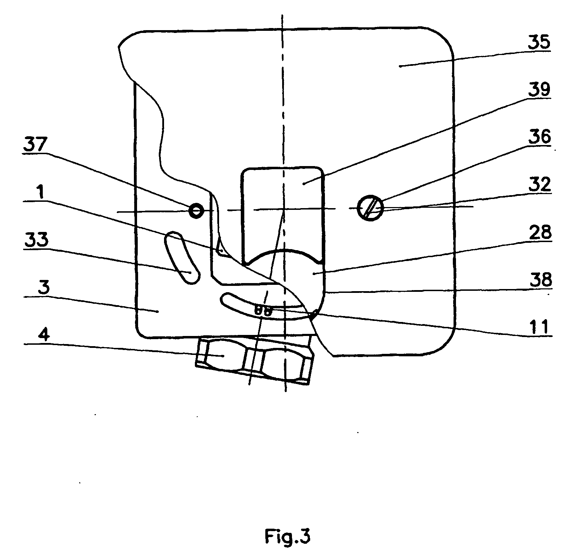

Zwischen einer schematisch dargestellten Wand 31, wie sie in vielen Fällen, insbesondere im Wohnungsbau, Verwendung findet und der Grundplatte 28 ist das als Blechteil ausgebildete Befestigungselement 3 angeordnet, dass über kreisförmig angeordnete Langlöcher 33 in an sich bekannter Weise beispielsweise mittels nicht dargestellter Schrauben und Dübel an der Wand 31 befestigt ist (Fig. 3).

Über Rastelemente 34 ist die Grundplatte 28 mit einer sie überdeckenden Haube 35 verbunden. Die Haube 35, die in Fig. 3 in teilweise aufgebrochener Ansicht dargestellt ist, besitzt auf ihrer Vorderseite zwei Bohrungen 36 zur Aufnahme von Befestigungsschrauben 32, die mittels im Befestigungselement 3 befindlicher Gewindelöcher 37 mit diesem verschraubt sind, sowie ein Langloch 38, wobei sich hinter einem Teil des Langloches 38 der Gasausgang des Ausgangsstutzens 18 befindet.

Zwischen der Haube 35 und der Grundplatte 28 ist ein als Abdeckung dienender, in seiner Längsrichtung beweglich geführter Schieber 39 angeordnet. Eine in Bewegungsrichtung des Schiebers 39 wirkende Feder 40, die sich einerseits an der Haube 35 und andererseits auf dem Schieber 39 abstützt, bewirkt, dass der Schieber 39 den den Gasausgang des Ausgangsstutzens 18 freigebenden Bereich des Langloches 38 verschließt und erst durch entsprechende Einführbewegungen des Gasanschlussstecker 19 den Gasausgang des Ausgangsstutzens 18 freigibt, wodurch eine Verbindung zwischen der Gassteckdose und dem Gasanschlussstecker 19 ermöglicht wird.

Die Wirkungsweise der in diesem Ausführungsbeispiel dargestellten Gassteckdose ist nachfolgend beschrieben:

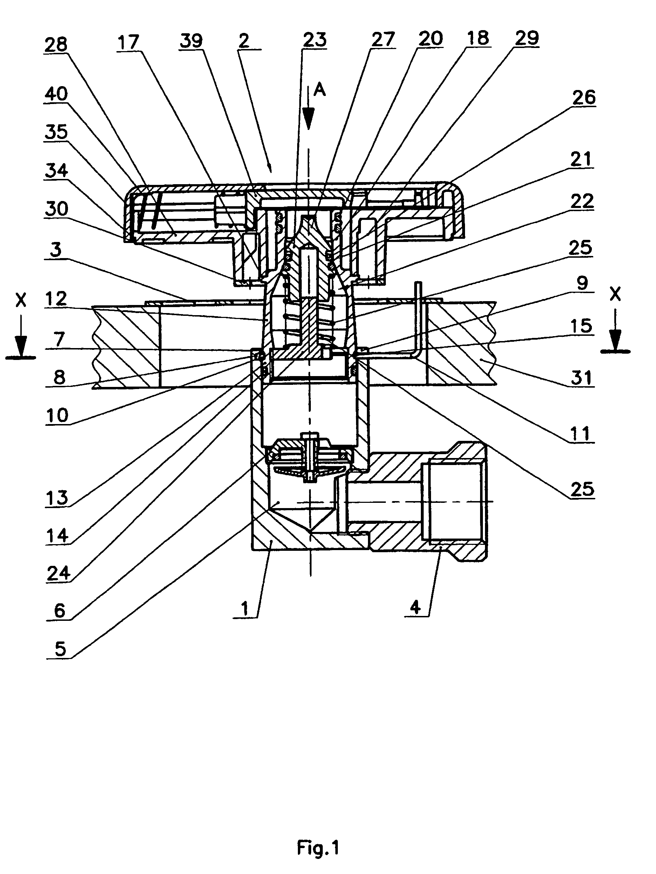

In Fig.1 ist eine Gassteckdose in der vormontierten Stellung dargestellt. Das Gehäuse 1 befindet sich in bzw. hinter der Wand 31 und ist über den Eingangsstutzen 4 mit der ortsfest installierten Gasleitung verbunden, deren Lage in diesem Ausführungsbeispiel, wie in der Fig. 3 ersichtlich, bewusst von der üblicherweise angestrebten Rechtwinkligkeit abweicht. Mit Hilfe der im Befestigungselement 3 vorhandenen Langlöcher 38 wurde diese Abweichung so korrigiert, dass sich, wie ebenfalls in Fig. 3 erkennbar, die Gewindelöcher 37 für die Befestigung der Absperreinrichtung 2 in der gewünschten waagerechten Lage befinden. Mittels der bereits weiter oben erwähnten nicht dargestellten Schrauben ist anschließend das Befestigungselement 3 an der Wand 31 befestigbar.

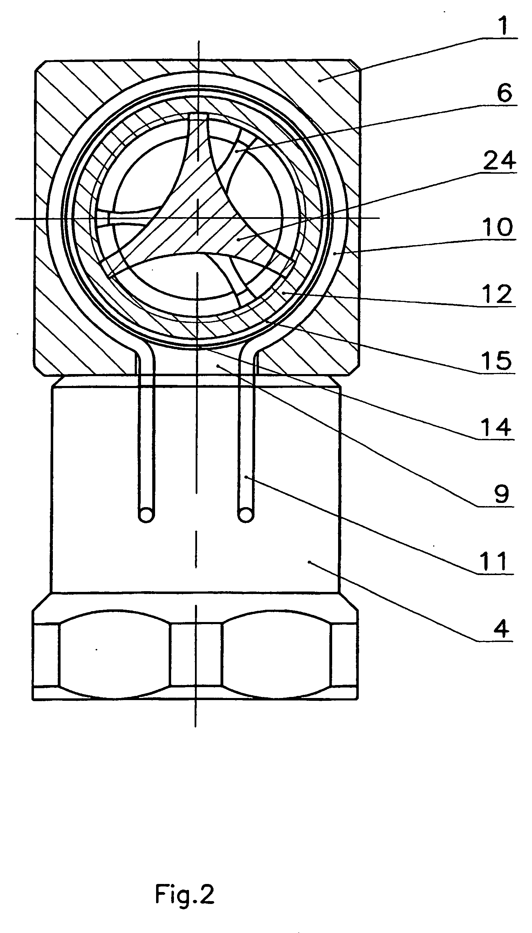

Die Tülle 12 der Absperreinrichtung 2 ist in Fig. 1 gerade so weit in das Gehäuse 1 eingeführt, dass der Haltering 10 in der Rastnut 15 liegt. Ein Entfernen der Absperreinrichtung 2 vom Gehäuse 1 ist dann nur noch möglich, wenn der Haltering 10 durch ein mittels Werkzeug bewirktes Auseinanderdrücken der Enden 11 so aufgeweitet wird, dass er sich mit seinem gesamten ringförmigen Bereich in der im Gehäuse 1 befindlichen Nut 8 befindet, wie es in der Fig.2 in Abweichung von der Darstellung in Fig. 1 gezeigt ist.

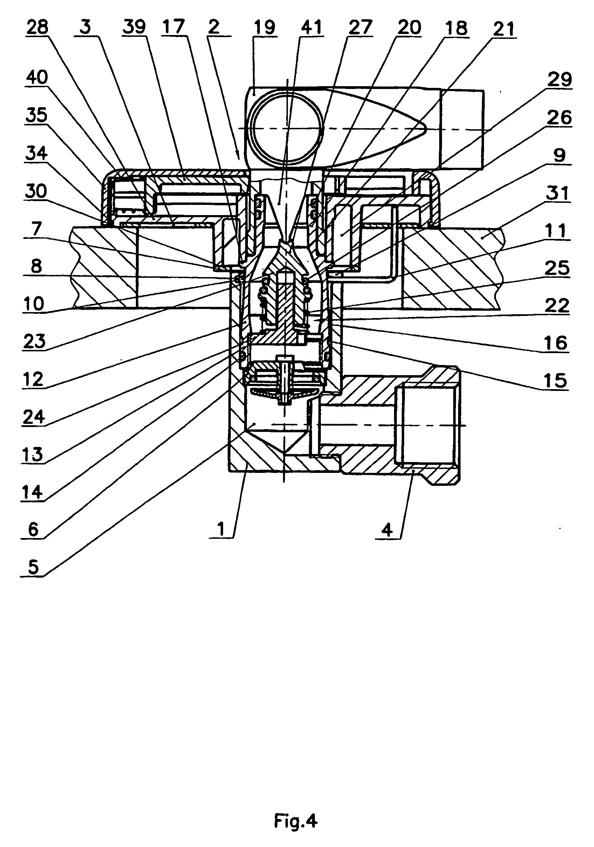

Wie in der Fig. 4 zu erkennen ist, ist die Gassteckdose nunmehr fertig montiert. Die Tülle 12 wurde in ihrer Längsrichtung weiter in das Gehäuse 1 geschoben bis die Grundplatte 28 am Befestigungselement 3 anliegt, wobei der Haltering 10 zu Beginn, ermöglicht durch die schräg ausgeführte Nutflanke der Rastnut 15, aus dieser herausgleitet. Mittels Befestigungsschrauben 32 ist die Absperreinrichtung 2 fest mit dem Befestigungselement 3 verbindbar.

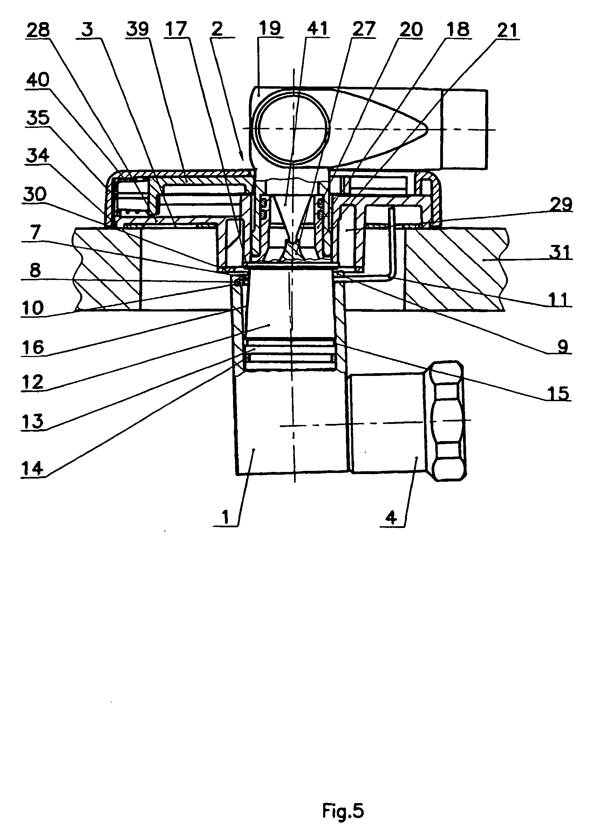

Bei der Einführungsbewegung werden gleichzeitig durch leichtes Schwenken der Tülle 12, wie in Fig. 5 dargestellt, auch auf die Längsachse der Tülle 12 bezogene Lageabweichungen des Gehäuses 1 so korrigiert, dass sich die äußeren sichtbaren Teile der Gassteckdose in der gewünschten, optisch ansprechenden Form an der Wand 31 befinden.

Desweiteren ist in der Fig. 4 die Gassteckdose in der geöffneten Stellung gezeigt, d.h. der Gasanschlussstecker 19 befindet sich mit seinem Anschlussstück in der durch die äußere Mantelfläche des Ausgangsstutzens 18 und die innere Mantelfläche des Domes 29 gebildeten Aufnahmeöffnung. Dabei wird mittels der auf der äußeren Mantelfläche des Ausgangsstutzens 18 angeordneten O-Ringe 20 die notwendige Gasdichtheit hergestellt. Erst nachdem die äußere Gasdichtheit gewährleistet ist, drückt ein im Gasanschlussstecker 19 befindlicher Stößel 41 bei der weiteren Bewegung des Gasanschlusssteckers 19 gegen die Verlängerung 27 und öffnet das Absperrventil 22. Die Verbindung mit der ortsfest installierten Gasleitung ist hergestellt. Durch den im Gehäuse 1 befindlichen Gasströmungswächter 6 ist sichergestellt, dass beim Auftreten einer unzulässigen Durchflusserhöhung, wie es beispielsweise bei einem Schlauchbruch der Fall ist, durch ein Schließen des Gasströmungswächters 6 die Gasleitung verschlossen wird.

Um bei späteren Renovierungsarbeiten auch hinter den durch die Grundplatte 28 abgedeckten Bereich der Wand 31 zu kommen, ist es nur notwendig die Befestigungsschrauben 32 zu lösen und die Absperreinrichtung 2 von der Wand 31 wegzuziehen. Dies ist möglich bis der Haltering 10 in der Rastnut 15 einrastet.

Bei einem gewünschten Austausch der Absperreinrichtung 2 ist es erforderlich den Haltering 10, wie bereits weiter oben beschrieben, aufzuspreizen, um die Absperreinrichtung 2 mit der Tülle 12 vollständig aus dem Gehäuse 1 herauszuziehen. Sollte zu diesem Zeitpunkt die mit dem Eingangsstutzen 4 verbundene ortsfest installierte Gasleitung nicht geschlossen sein, würde selbstredend auch in diesem Fall der Gasströmungswächter 6 ansprechen und die Leitung schließen.

Die erfindungsgemäße Gassteckdose ist selbstredend nicht auf die dargestellten Ausführungsbeispiele beschränkt. Vielmehr sind Änderungen, Abwandlungen und Kombinationen möglich, ohne den Rahmen der Erfindung zu verlassen.

So kann beispielsweise auch der Eingangsstutzen 4 längsbeweglich im Gehäuse 1 angeordnet sein, analog der dargestellten Verbindung zwischen dem Gehäuse 1 und der Tülle 12, wobei das Gehäuse 1 dann selbstredend auch in dieser Richtung einen zur Aufnahme eines verschieblichen Teiles des Eingangsstutzens 4 dienenden Bereich mit einem in einer Nut 8 befindlichen Haltering 10 besitzt.

Um einen noch größeren Schwenkbereich bezüglich der Längsachse der Tülle 12 zu erreichen, kann diese desweiteren mit einem zusätzlichen konischen Bereich 16 versehen werden, der in den Dom 29 hineinragt.

### Aufstellung der Bezugszeichen

- 1: Gehäuse
- 2: Absperreinrichtung
- 3: Befestigungselement
- 4: Eingangsstutzen
- 5: Raum
- 6: Gasströmungswächter
- 7: Öffnung
- 8: Nut
- 9: Aussparung
- 10: Haltering
- 11: Ende
- 12: Tülle
- 13: Bund
- 14: O - Ring
- 15: Rastnut
- 16: Bereich
- 17: Anschlag
- 18: Ausgangsstutzen
- 19: Gasanschlussstecker
- 20: O-Ring
- 21: Ventilsitz
- 22: Absperrventil
- 23: Schließkörper
- 24: Führungsstück
- 25: Schließfeder
- 26: O-Ring
- 27: Verlängerung
- 28: Grundplatte
- 29: Dom
- 30: Halteblech
- 31: Wand
- 32: Befestigungsschraube
- 33: Langloch
- 34: Rastelement
- 35: Haube
- 36: Bohrung
- 37: Gewindeloch
- 38: Langloch
- 39: Schieber
- 40: Feder
- 41: Stößel

## Patentansprüche

1. Gassteckdose mit einem Gehäuse (1), das einen Eingangsstutzen (4) für die Herstellung einer festen Verbindung der Gassteckdose mit einer ortsfest an oder in einer Wand (31) installierten Gasleitung aufweist, mit einer Absperreinrichtung (2) für den Anschluss eines Gasanschlusssteckers (19), insbesondere eines Gasschlauchsteckers, die beim Anschluss des Gasanschlusssteckers (19) erst nach hergestellter äußerer Dichtheit den inneren Gasweg freigibt, wobei die Absperreinrichtung (2) mit einer rohrförmigen Tülle (12), die an ihrem dem Gehäuse (1) zugewandten Ende einen Bund (13) aufweist, der auf der dem Gehäuse (1) abgewandten Seite durch eine Rastnut (15) begrenzt wird, gasdicht in das Gehäuse (1) hineinragt, das im Inneren mit einer Nut (8) versehen ist, in der ein federnder Haltering (10), der abgewinkelte Enden (11) aufweist, die durch eine im Bereich der Nut (8) im Gehäuse (1) befindliche Aussparung (9) nach Außen ragen, angeordnet ist, und der sich mit seinem ringförmigen Bereich im aufgespreizten Zustand vollständig in der Nut (8) befindet und so das Hineingleiten der Tülle (12) in das Gehäuse (1) ermöglicht, wohingegen bei der Lage des Halteringes (10) in der Rastnut (15) ein Herausgleiten der Tülle (12) aus dem Gehäuse (1) verhindert ist, und mit einem Befestigungselement (3), das einerseits mit der Absperreinrichtung (2) und andererseits mit der Wand (31) verbunden ist, wobei die Absperreinrichtung (2) gegenüber dem Gehäuse (1) nach dem einseitigen Lösen des Befestigungselementes (3) um die Längsachse der Tülle (12) schwenkbar ist.

2. Gassteckdose nach Patentanspruch 1, bei der die der Absperreinrichtung (2) zugewandte Flanke der im Gehäuse (1) befindlichen Nut (8) so ausgeführt ist, dass sich die Nutbreite vom Nutgrund ausgehend vergrößert.

3. Gassteckdose nach einem der Patentansprüche 1 oder 2, bei der die dem Bund (13) abgewandte Flanke der Rastnut (15) so ausgeführt ist, dass sich die Nutbreite vom Nutgrund ausgehend vergrößert.

4. Gassteckdose nach einem der Patentansprüche 1 bis 3, bei der die Oberfläche der Tülle (12) in ihrer vom Gehäuse (1) sich entfernenden Längsrichtung nach der Rastnut (15) einen sich konisch verjüngenden Bereich (16) aufweist.

## Claims

1. Gas plug connector with a casing that has an inlet socket (4) to make a permanent connection of the gas plug connector to a stationary gas pipe installed on or in a wall (31), a shut-off device (2) for the connection of a gas connector plug (19), in particular a gas hose plug, that releases the internal gas way only if and when external tightness has been established, whereby the shut-off device (2) has a tube-shaped nozzle (12) that has a collar (13) on its end facing towards the casing (1) and where said collar has a catch groove (15) bordering on the side pointing away from the casing (1), and protrudes in a gas-tight way into the interior of the casing (1) which is has a groove (8) in which rests a spring holding ring (10) that has ends (11) pointing sideward at an angle and projecting outwards through a recess (9) situated around the groove (8) inside the casing (1), and where the circular part of said ring in opened state is entirely inside the groove (8) so that the nozzle (12) can slip into the casing (1), whereat the nozzle (15) with the holding ring (10) being inside the catch groove (15) is prevented from slipping out of the casing (1), and a fastening element (3) that on its one side is attached to the shut-off device (2) and on the other side to the wall (31), where the shut-off device (2) can swing around the nozzle's (12) longitudinal axis, seen from the casing (1), after the fastening element (3) is detached on one of its sides.

2. Gas plug connector according to claim 1, in which the flank of the groove (8), situated inside the casing (1), facing towards the shut-off device (2) is executed so that the groove's width increases, seen from the groove's bottom in upward direction.

3. Gas plug connector according to one of the claims 1 or 2, in which the flank of the catch groove (15) pointing away from the collar (13) is executed so that the groove's width increases, seen from the groove's bottom in upward direction.

4. Gas plug connector according to one of the claims 1 to 3, in which the nozzle's (12) surface has a conical tapering section (16) located in the area behind the catch groove (15) seen in the nozzle's longitudinal direction away from the casing (1).

## Revendications

1. Connecteur de gaz avec un boîtier (1), qui présente une douille d'entrée (4) pour la réalisation d'un raccordement fixe de la connecteur de gaz avec une conduite de gaz stationnaire installée sur le mur (31) ou dedans, avec un dispositif de blocage (2) pour le raccordement d'une fiche de branchement du gaz (19), en particulier d'une fiche sur tuyau flexible de gaz et qui n'ouvre l'arrivée intérieure de gaz qu'après réalisation d'un raccordement extérieur étanche réalisé après avoir branché la fiche de branchement du gaz (19), le dispositif de blocage (2) étant doté d'une douille tubulaire (12) qui sur son extrémité tournée vers le boîtier (1) porte un collet (13) lequel est limité sur le côté opposé au boîtier (1) par une rainure d'arrêt (15), s'introduit de manière étanche au gaz dans le boîtier (1) qui est pourvu à l'intérieur d'une rainure (8) dans laquelle est disposée une bague de retenue faisant ressort (10), présentant des extrémités coudées (11) qui dépassent vers l'extérieur par un évidement (9) se trouvant dans le boîtier (1) dans la zone de la rainure (8) et qui dans sa partie annulaire à l'état écarté a pénétré en entier dans la rainure (8) permettant ainsi le glissement de la douille (12) dans le boîtier (1), par contre la position de la bague de retenue (10) dans la rainure d'arrêt (15) interdit que la douille (12) glisse hors du boîtier (1), et avec un élément de fixation (3) qui est relié d'une part avec le dispositif de blocage (2) et d'autre part avec le mur (31), le dispositif de blocage (2) pouvant pivoter autour de l'axe longitudinal de la douille (12) par rapport au boîtier (1) après le décrochage unilatéral de l'élément de fixation (3).

2. Connecteur de gaz selon la revendication du brevet 1, sur laquelle le flanc tourné vers le dispositif de blocage (2) de la rainure (8) se trouvant dans le boîtier (1) est exécuté de telle manière que la largeur de la rainure s'agrandit à partir du fond de la rainure.

3. Connecteur de gaz selon les revendications 1 ou 2, sur laquelle le flanc de la rainure d'arrêt (15) opposé au collet (13) est exécuté de telle manière que la largeur de la rainure s'agrandit à partir du fond de la rainure.

4. Connecteur de gaz selon les revendications de 1 à 3, sur laquelle la surface de la douille (12) présente dans la direction longitudinale s'éloignant du boîtier (1) vers la rainure d'arrêt (15) une zone (16) s'amincissant en forme de cône.
